# EUROPEAN PATENT SPECIFICATION

(11) **EP 1 267 146 B1**
(45) Date of publication and mention of the grant of the patent: **18.05.2011**
(21) Application number: 01114450.8
(22) Date of filing: 15.06.2001
(51) Int. Cl.: G01C 21/34, G08G 1/0968, G06F 17/30

(54) **A method for operating a route planning system for a motor vehicle, a navigation system arranged for implementing such method, and a motor vehicle comprising such interactive navigation system**
Verfahren zum Betreiben eines Wegplannungssystems für ein Kraftfahrzeug, Navigationssystem zur Durchführung des Vefahrens, und Kraftfahrzeug mit einem solchen interaktiven Navigationssystem
Procédé d'utilisation d'un système de plannification d'itinéraire pour un véhicule à moteur, système de navigation pour la mise en oeuvre de cette méthode et véhicule à moteur comprenant un tel système de navigation interactif

(43) Date of publication of application: 18.12.2002
(73) Proprietor: Continental Automotive GmbH, 30165 Hannover (DE)
(72) Inventor: Hendriks, Antonius Johannes, 5509 NR Veldhoven (NL)

(56) References cited:
- EP-A- 1 098 287
- WO-A-97/48065
- US-B1- 6 216 086

## Description

The invention relates to a method for operating a route planning system for a motor vehicle as based on discrete roads, through storing one or more preferred destinations which usually are those that will be selected frequently, in an address book. Upon receiving a planning request for such a preferred destination, the system will retrieve an associated storage item from the address book. This feature allows fast translation from an address, such as one given by street and number, to a geographical mapping on a particular road, and as such will lead to a faster reaction from the system. Such a method is known from EP 1 098 287 A1.

However, every time such preferred destination is called, the route thereto will have to be planned anew, resulting in a long waiting time before the first advice can be given to the user. Note that in fact, many planning systems will start planning in a direction from the destination towards the starting point. Especially for situations like the daily commuting home-work-home, system users will be employing the same route every time, but will just want to obtain relevant information, such as regarding problems that may exist on their commute route. Of course, in other situations, the same problems would exist.

Now, the inventor has recognized that the probability for such a problem to occur will be quite small, so that in fact, the planning of the first part of the route could often proceed straightforwardly, if only some intermediate point of such route were available from the start.

WO 97/48065 discloses a method for operating a route planning systems using waypoints to calculate a route to a destination.

In consequence, amongst other things, it is an object of the present invention to minimize the amount of processing time necessary for the route part extending from the start location to a certain such intermediate point or waypoint through associating the preferred destination with at least one such waypoint. A particular situation in point may occur when in the morning commuting from a suburban location to a downtown city center, where problems will relatively rarely occur in the first part of the route. In that situation, the planning of the first route part will require only a few percent of the overall planning time. The invention will therewith also allow a robust procedure for the system to decide on the optimum path.

Now therefore, a method for operating a route planning system for a motor vehicle as based on discrete roads, through storing preferred destinations in an address book, and upon receiving a planning request for such preferred destination retrieving an associated storage item from the address book as a beginning point of the route planning, according to the invention is characterized in that such preferred destination storage item furthermore includes at least one start location and at least one intermediate waypoint location associated to the combined start and destination locations, and in that such request triggers a check of an actual location of the vehicle versus such start location, and -if positive- will first produce and present route information between such start location and a next waypoint and then plan the remainder of the route, or -if negativ- will produce route information between the start location (S) and the destination location.

Advantageously, for one or more combinations of a start location and a destination location a plurality of waypoint locations is stored. This will in general give a further planning speed-up.

Advantageously, an earlier waypoint along the route will have a closer spacing than a later waypoint. This will present a further speed-up of the planning of the first part of the route.

The invention also relates to a motor vehicle navigation system arranged for implementing the above method according to the invention and to a motor vehicle comprising such interactive system.

These and further aspects and advantages of the invention will be discussed more in detail hereinafter with reference to the disclosure of preferred embodiments, and in particular with reference to the appended Figures that show:
Figure 1a, 1b, two flow charts for operating the present invention;
Figure 2, a symbolic configuration of a route and its waypoints:
Figure 3, a procedure for associating a route configuration to its waypoints;
Figure 4, a vehicle system embodying the present invention;
Figure 5, a time saving schedule for storing waypoints.

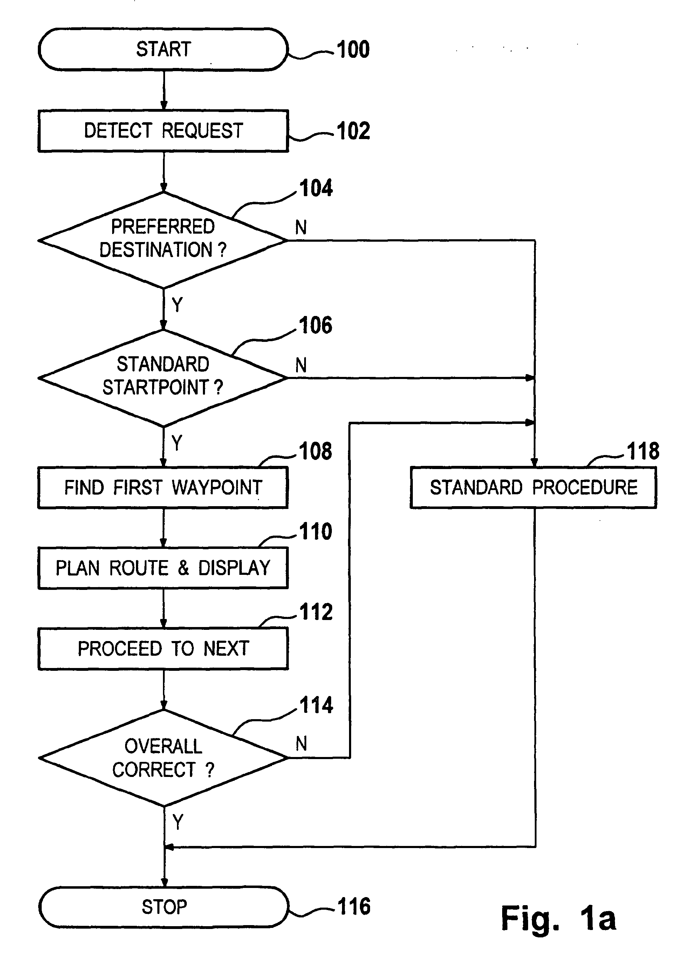

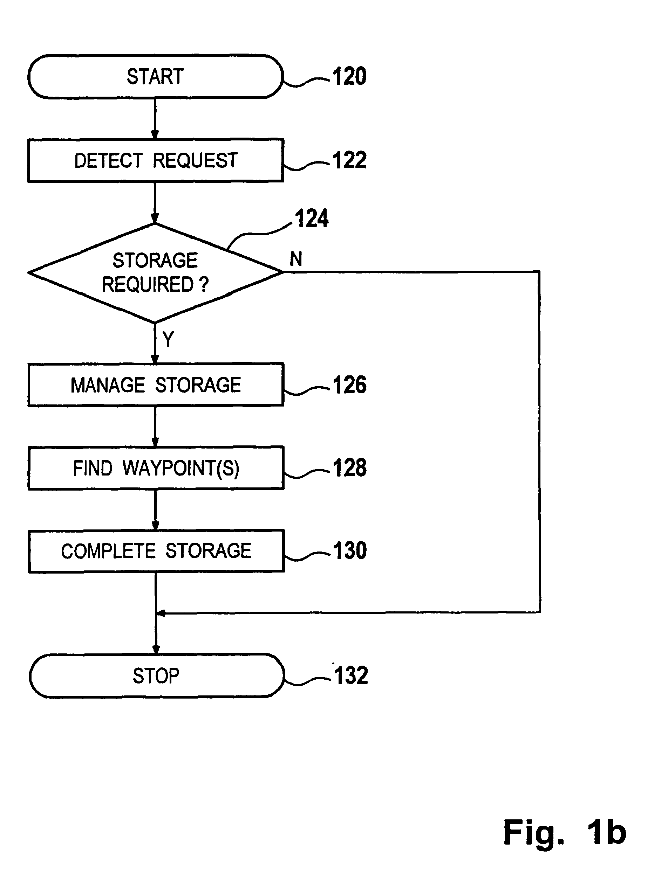

Figure 1a represents a first flow chart for operating the present invention, in particular, as regarding the route planning proper. In block 100, the processing will claim and assign the necessary hardware and software facilities, such as being executed at the starting up of the vehicle in question. In block 102, the system will detect a user request for planning a route; for brevity, no waiting loop associated to such detecting has been shown. Such request may include an address, a name of a person or of another entity, a working address such as "Main Office", or another suitable indication. In block 104, the system detects whether this is a so-called "preferred destination" that has indeed been stored as such. The storing procedure will be discussed with reference to Figure 1b hereinafter. If Negative (N), the system will proceed to block 118, wherein a standard route planning will be executed. Inasmuch as route planning per se has been common technology for some time, reference is had in this respect to standard litterature and various planning systems that have been commercially available.

If positive in block 104 (Y), the system proceeds to block 106, and will detect whether the actual location of the vehicle is close enough to a standard startpoint in relation to the destination contained in the actual request. A single destination may have one or more standard startpoints. For example, the destination "Home" may have both "Main Office" and "Branch Office" as standard startpoints. Another scheme would allow multiple storage of the same destination, but each storage being associated with a different startpoint. The checking of the actual vehicle location may be effected by a General Positioning System GPS or according to another standard procedure. The check may have some tolerance, such as determined by the size of the parking garage, or another spread. If Negative in block 106, the system again proceeds to the standard procedure in block 118. If positive (Y), the system will however go to block 108, find the first waypoint associated to the actual combination of the standard startpoint and the preferred destination, plan the route for this relatively short distance, and display the outcome to the user person. Quite often, this will require only a brief interval of time, such as only a few seconds. As usual, the term "Display" includes all categories of audio/video that are suitable for the user interface. Then, in block 112, the route planning will proceed to the remainder of the route, which may be done either from the first waypoint to the next, and so on, or rather from the destination to the first waypoint.

In block 114, the system checks the overall route planning for correctness, such as by replanning the overall route down to the original start point. The outcome may be Negative, in that the first way point may ***not*** be included in the overall planned route. In that case, the system may again revert to block 118. The vehicle by then may have been underway for some time, in which case the planning takes as actual starting point either the instantaneous vehicle position, or rather some anticipated position that will apply at the instant the new planning will be complete. In certain situations, it would be in place to have the user interface presenting a specific ***correction!*** signalization. Such may be the case when the user would have to make an unexpected turn, or even retrace a part of the route already covered.

If however Positive in block 114, and also after the traversing of block 118, the system will go to the terminating block 116, therein again relinquishing the facilities claimed in block 100, or rather, repetitively presenting guidance indications to the user.

Figure 1b illustrates a second flow chart for operating the present invention, in particular, as regarding the operation of storing the preferred destinations. In block 120, the processing will claim and assign the necessary hardware and software facilities, such as being executed at the starting up of the vehicle in question. In block 122, the system will detect a user request for a particular destination. The request may, or may not include a request for actually issuing a route guidance procedure. For brevity, no waiting loop associated to such detecting has been shown. The request may include an address, a name of a particular entity that would be address-locatable in a higher-level data base, or another suitable specification. Furthermore, the subsequent storing may get associated to a label, such as a name or a function indication such as "Main Office", "Mother", or other.

In block 124, the system detects whether the request is associated to an actual ***storage request.*** If negative (N), the system goes to termination block 132, which in fact may represent a transition to the flow chart of Figure 1a, such as by way of block 104 thereof. If positive (Y) in block 124, in block 126 the storage of the new preferred destination is managed. This may include various checks. A first one checks whether the new destination is present already, it would then only be acceptable in ***combination*** with a new starting point. A second one checks whether there is enough free storage space available. If not, some replacement algorithm will be executed, such as according to Least Recently Used, least frequently used, or other. The actual replacement of an old preferred destination may be subjected to an acceptance dialog therefor viz à viz the user.

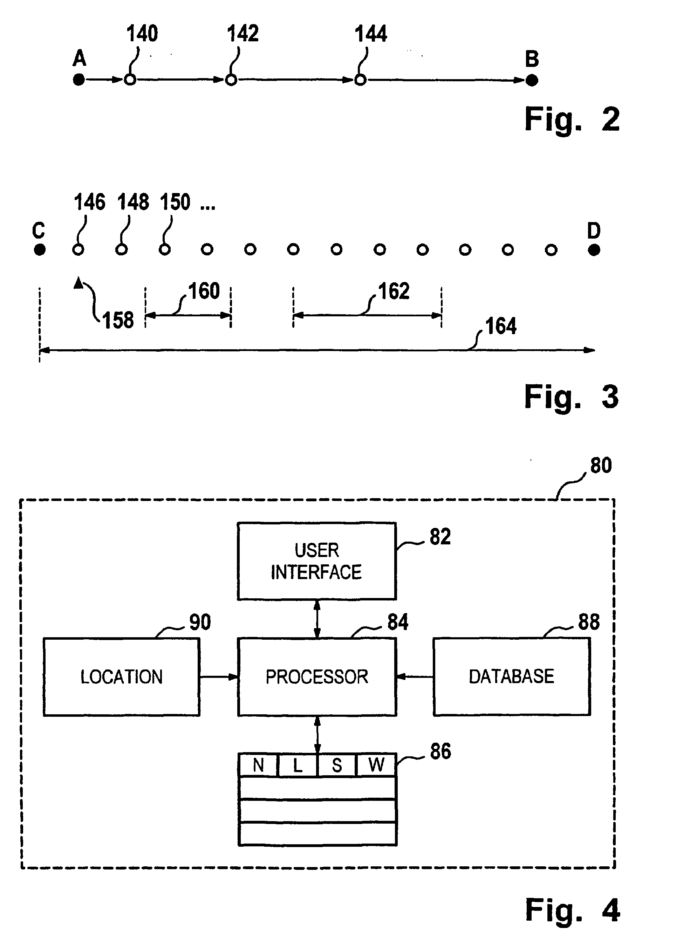

Subsequently, in block 128 for the new route one or more waypoints are found. This will be explained with reference to Figure 3 hereinafter. Subsequently, the storage of all data related to the new combination of start point, preferred destination and waypoint(s) will be completed in block 130, and the system will proceed to block 132, and if applicable, to the standard route guidance procedure associated, such as to block 118 in Figure 1a.

Figure 2 illustrates a symbolic configuration of a route from point A to point B and its three waypoints 140, 142, 144. For simplicity, the route has been shown as a straight line. The overall number of way points depends on various circumstances, such as the length of the route, its complexity, and other aspects. In particular, the number may be much higher. By itself, the associating of waypoints to the planned route has been discussed extensively in earlier copending patent application EP A 01101123.6 assigned to the Assignee of the present Patent Application and herein incorporated by reference. For the present invention however, generally only the first one or two waypoints will be relevant.

Figure 3 illustrates a procedure for associating a planned route configuration to its waypoints, in particular, for application in the present invention. First, the route from start point C to destination D has been indicated by a solid and straight arrow 164. Next, the planned route gets a number of standard waypoints such as according to the reference indicated supra. For simplicity, these have been indicated as points 146, 148, 150, that for reasons of simplicity, have been shown as being uniformly spaced, which in practice need not be so. Next, the selection thereamongst for storing together with the preferred destinations has been shown by indications 158, 160, 162. First, the waypoint 146 closest to the starting point C has been selected for storing through selection mechanism 158. Alternatively, this selection may be governed by setting a certain distance such as 500 metres from the start location, and selecting the first waypoint nearest to this distance from the start location for storage in the address book. Next, selection mechanism 160, of which the geographical size has indicated through a smaller solid arrow, will select for storage one of the original waypoints covered by this arrow, such as waypoint 150. A third waypoint may be selected for storage through selection mechanism 162. Clearly, the first stored waypoint is closer spaced than the other, later waypoints that may be stored..

In addition to the above, a preferred destination may be an actual destination, for allowing the principle of the present invention to be additionally used for the situation wherein a journey is interrupted. In practice, travelling will be interrupted quite often such as for refueling or various other activities. A first policy would be to leave the planned route as is, but such could lead to malfunctioning if, for example, traffic conditions have changed in the meantime. Complete replanning, however, could again cause a long delay. Therefor, the present invention allows the system to construct a compact waypoint description of the remaining route which at power-down is stored in persistent memory. Upon continuing after the stop, the system will have the first advice ready in a matter of seconds, so that the journey may continue. The interruption of the journey will generally be detected either through a power down.

Further in addition to the above, a preferred destination may accommodate the storing of one or more personalized routes or route parts through one or more personalized waypoint informations. In fact, a particular user may have personally preferred routes or route parts that are not produced by either of the route planner characteristics, such as those which prefer the fastest or shortest route, prefer or avoid motorways, etcetera. In this aspect, the system may offer the user an option to specify such a personalized favorite route by tracing a route along preferred road segments or along a sequence of waypoints. The present invention then will allow the system to select automatically optimum waypoints, that may differ from the user-introduced waypoints, such that compact storage is assured. The operation sequence is thus: enter user waypoints - find complete route - map on set of secondary waypoints. Now, even if newer or different maps are used, the system will automatically reconstruct the same route.

Figure 4 illustrates a schematic vehicle system 80 embodying the present invention, the various subsystems thereof being indicated only by way of functional blocks. User interface block 82 effects bidirectional communication with a user person, such as through speech, keyboard and display, for transmitting planning and storage requests to the system and for outputting guidance information and other indicia regarding the progress of the functionalities discussed with reference to Figures 1a, 1b herabove. Vehicle location block 90 determines actual and/or anticipated vehicle position through GPS, or through another standard system. Data base Block 88 stores road network topography, and various other informations that may be relevant for system operability, such as traffic jams. Part of the data base may be located at some overall or governing authority outside the vehicle proper, but the communication procedure associated thereto has been omitted for clarity. Processor 84 communicates as shown with the other subsystems for executing the necessary processing operations.

Storage module 86 may contain the address book, and as shown store the informations regarding a plurality of preferred destinations, in this case four of them. Each such destination contains a ***name*** N, that is content-addressable, a ***geographical location*** L of the destination, a ***start point*** S by way of geographical location, and a ***waypoint*** W, the latter also by way of a geographical location. The name N of the requested destination is content addressed, and a hit will output geographical destination location L, starting point S, and waypoint W, each of these in the form of a set of coordinate values.

The referenced prior art regards so-called ***pivot points*** that may be used as waypoints according to the present invention. The art concerns the accurate reconstructing of location references in a vehicle navigation unit from their presentation by an off-board service provider that may possibly be using a different map from the in-vehicle navigation unit, whilst still allowing to operate the system with minimum communication costs. However, standard waypoints such as intersections may be used as well.

For anchoring geographical locations across map differences, the pivot points will be chosen at locations where ambiguity between two map organizations should be minimal. On highway or motorway road segments they will generally be chosen halfway between successively chosen road intersections, rather than at an intersection itself. Experience has shown indeed that this procedure will substantially mitigate any ambiguity, in that the pinpointing of the coordinates of a large intersection area will be subject to great variability or ambiguity between various map providers. Subsequently to the setting of the pivot points, the topology or connectivity pattern of the road network is employed to arrive at a compact but extremely robust reference pattern for the road segment or segments connecting such pivot points.

The concept for referencing pivot point locations is to describe such location references by a set of communicated indicators, such as pivot points, distances and road classes, in combination with a set of mandatory rules and optional guidelines. Through applying these, the vehicle navigation unit should be able to reconstruct the location reference from the set of indicators.

Any general location referencing concept must compensate for differences that may exist between the map version at the service provider and the map version on board of the navigation unit. Generally, the two versions need not be fully uniform through coding differences or through changes that have been effected in the course of time, such discrepancies being caused by:
- absent roads or absent exits from major roads
- the varying use of exonyms for particular road names, such as in a bilingual environment
- differences in digitizing, such as in road centerline offsets, the number of unconnected lanes, or in road lengths
- differences in the road classifications, through interpretation differences or even errors
- changes due to road upgrading or downgrading, changes in the geometry of a junction, or the temporary execution of repair or other works.

For planning a journey, the in-vehicle navigation system will first determine the actual vehicle position and will furthermore receive a destination position from a user, and will then access an in-vehicle map for calculating the optimum route. Various changes may be known to the service provider that could mandate or suggest amending a route that would be based on only the in-vehicle map. The service provider will transmit such changes, that may imply that certain routes or parts are unavailable or may only be used with difficulty, such as in that one of a plurality of parallel lanes is out of service. The information of such transmission should be kept low. The in-vehicle system will consider the changes in a particular region of interest, update its map information, and execute the calculating as based on the amended map.

Various further aspects are worth noting. The transmitting of information defining a road segment is based on signalling a string of pivot points. Such road segment location reference comprises an ordered sequence of one or more pivot point references, each pivot point reference comprising substantially all of a pivot point location reference, a pivot-point-associated distance to a next pivot point, a pivot-point-associated distance to a next road type change and a new road type indication therefor, and a pivot-point-associated distance indication to a location end.

The coding of a string of parts may be immediate, in that each transition is coded separately through giving its distance from a predecessor. Another scheme is to give the length times weight products for the transitions, which may even be given as intermediate sums.

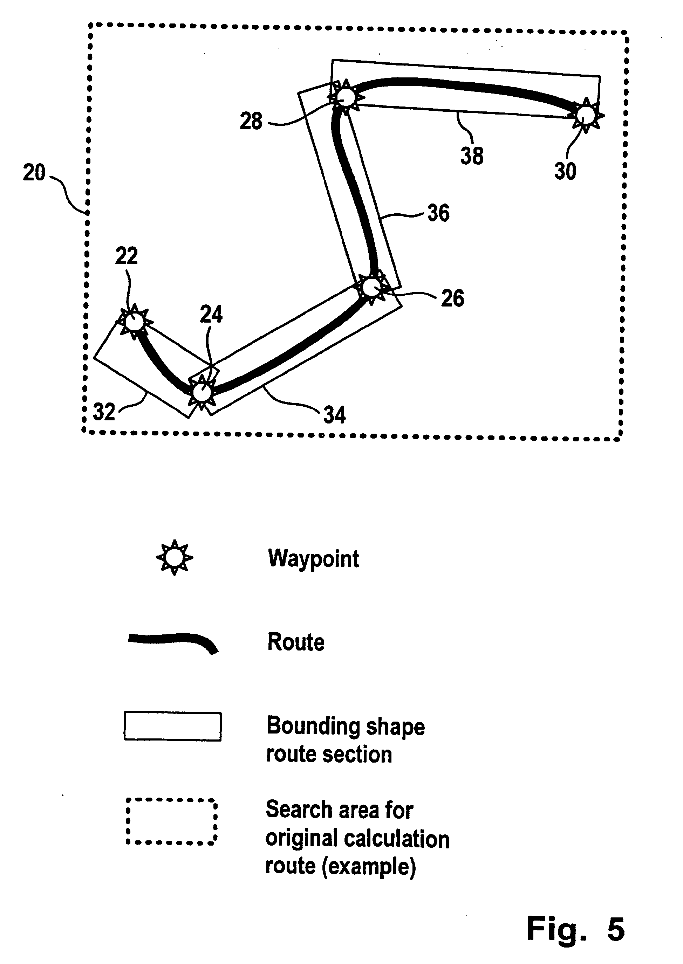

Figure 5 illustrates a time saving schedule for storing waypoints. Intelligent waypoint selection algorithms, in combination with context information of the section of the route between successive waypoints, may cause a significant speed-up of the route reconstruction with respect to the original route calculation. The route description then contains both waypoints as brief descriptions of salient aspects of the route sections in between successive waypoints, such as the road number or route section distance. The Figure in fact shows the search area 22 that could be necessary for finding the route between start 22 and destination 30. The giving of three additional waypoints 24, 26, 28, could limit the search area to the rectangles 32, 34, 36, and 38. This would clearly limit necessary processing time accordingly.

Waypoint selection algorithms can be composed out of one or more element algorithmic aspects. These algorithmic aspects, together with a description of their impact of route reconstruction speed, include the following:
1. Close geographic spacing of waypoints on the initial part of the route, followed by progressively larger geographic spacing on later parts of the route. This algorithm will ensure that the initial part of the route will need only a small geographical search, such that the initial part is found quickly, and the user can be guided without significant delay.
2. Placement of waypoints to satisfy route or location reconstruction criteria as given in the pivot point prior art. Given a route, entry and exit location on that route, and possibly alternatives, then waypoints can be selected that satisfy pivot point requirements. Such a waypoint selection will assure robust reconstruction of the route as is indicated in the prior art.
3. Spacing of waypoints such that the route is split into relatively straight-line sections. When using the pivot point prior art representation for a route, for such sections the airline distance and actual distance along the route section will specify a search ellipse, where within the actual route must lie. For example, in the Netherlands, for a route from Eindhoven to Rotterdam via Utrecht, the placement of an intermediate waypoint in or near Utrecht will eliminate the need in route reconstruction to evaluate routes leading via Breda, or even Gorichem. These are potential alternates which a route planner needs to consider but simply fall outside the search ellipse of the route section Eindhoven - Utrecht.

As a result the combined search area to be considered in reconstruction of successive route sections can only be a small fraction of the search area a route planner must consider during the original calculation of the route.

The search ellipse extends at most half the difference of the route distance and airline distance beyond the straight line connecting the two successive waypoints at either waypoint. The search ellipse has a maximum width equal to the square root of the difference of the squared route distance and squared airline distance, at the point halfway along the straight line connecting the two successive waypoints.

A simple embodiment of the algorithm may simply place waypoints when the actual distance along the route exceeds a predetermined factor times the airline distance, such as by a factor of 1.3.

Alternatively, the bounding hull of the route section between two successive waypoints may be explicitly stored (a simple shape would be a bounding rectangle, or a bounding polygon). See Figure 5.

Saved route section characteristics may include distance along route section, c.f. the pivot point prior art, or a bounding hull.

Placement of waypoints may occur on selected features or natural route gateways. Tunnels, ferries or bridges are natural locations for intermediate waypoints since normally there exist few crossings over natural boundaries such as lakes, rivers or mountains. Placement of such waypoints may significantly reduce search efforts for route construction. Waypoints may also be chosen to signify a constant aspect of an intermediate route section, such as a road number or road type. The route reconstruction algorithm may then simply "follow" the road of the given number. In effect, the given constant aspect, such a road number, is employed as a filter to eliminate alternatives, and hence to sharply focus the search.

Saved route section characteristics present salient constant aspects of the route section, e.g. road number, road name.

The above preferred embodiments of the present invention have been given by way of illustration and explanation only. Persons skilled in the art will be able to make various changes and amendments thereto, all of which being covered by the appended Claims, inasfar as they would be covered by the scope of such Claims.

## Claims

1. A method for operating a route planning system for a motor vehicle (80) as based on discrete roads, through storing preferred destinations in an address book (86), and upon receiving a planning request (102) for such preferred destination retrieving an associated storage item from the address book as a beginning point of the route planning, **characterized in that** such preferred destination storage item furthermore includes at least one start location (S) and at least one intermediate waypoint location (W) associated to the combined start and destination locations, and **in that** such request triggers a check (106) of an actual location of the vehicle versus such start location, and -if positive- will first produce and present route information between such start location and a next waypoint (110) and then plan the remainder of the route, or -if negative- will produce route information between the start location (S) and the destination location.

2. A method as claimed in Claim 1, **characterized in that** such preferred destination is an actual destination and such start location associates to an actual vehicle location that has been attained while traversing a route to said actual destination, which actual vehicle location is stored in association to a next intermediate waypoint location of said route and said actual destination upon detecting an interruption of said traversing.

3. A method as claimed in Claim 1, **characterized in that** such preferred destination storage item accommodates the storing of one or more personalized routes or route parts through one or more personalized waypoint informations.

4. A method as claimed in Claim 1, **characterized in that** for one or more combined start location and destination locations a plurality of waypoint locations is stored.

5. A method as claimed in Claim 4, **characterized in that** an earlier stored waypoint (140) along a route has a closer spacing than a later stored waypoint (142) along the route in question.

6. A method as claimed in Claim 4, **characterized in that** at least one waypoint is arranged to split an associated route so as to include a relatively straight-line and interrupted route section.

7. A method as claimed in Claim 4, **characterized in that** one or more waypoints are placed according to the principle of pivot points.

8. A motor vehicle navigation system being arranged for implementing a method as claimed in Claim 1, and comprising address book means (86), user interface means (82) for receiving a planning request (102) for such preferred destination, processing means (84) for thereupon retrieving an associated storage item from the address book (86) as a beginning point of the route planning, **characterized in that** the address book means (86) for such preferred destination storage item include at least one start location (S) and at least one intermediate waypoint location (W) associated to the combined start and destination locations, and **in that** such processing means (84) are arranged for under control of such request triggering vehicle location means (90) to present an actual vehicle location for checking (106) versus such start location, and **in that** said processing means are arranged for -if positive- first presenting route information between such start location and a next waypoint (110) and then planning the remainder of the route, -if negative- producing route information between the start location (S) and the destination location.

9. A motor vehicle navigation system as claimed in Claim 8, **characterized by** detection means for detecting an interruption of the traversing of a planned route, wherein such preferred destination is an actual destination and such start location associates to an actual vehicle location that has been attained while traversing said planned route, which actual vehicle location is stored in association to one or more subsequent intermediate waypoint locations of said planned route and said actual destination under control of a detection signal from said detecting means.

10. A motor vehicle navigation system as claimed in Claim 8, **characterized by** personalization means for controlling the storing in association with such preferred destination storage item, of one or more personalized routes or route parts through receiving one or more personalized waypoint informations.

11. A motor vehicle as claimed in Claim 8, comprising an interactive navigation system and comprising address book means (86), user interface means (82) for receiving a planning request (102) for such preferred destination, processing means (84) for thereupon retrieving an associated storage item from the address book (86) as a beginning point of the route planning, **characterized in that** the address book means (86) for such preferred destination storage item include at least one start location (S) and at least one intermediate waypoint location (W) associated to the combined start and destination locations, and **in that** such processing means (84) are arranged for under control of such request triggering vehicle location means (90) to detect an actual vehicle location for presenting such for a check (106) versus such start location, and **in that** said processing means are arranged for if positive first presenting route information between such start location and a next waypoint (110).

## Patentansprüche

1. Verfahren zum Betreiben eines Wegplanungssystems für ein Kraftfahrzeug (80) auf der Basis diskreter Straßen, durch Speichern bevorzugter Ziele in einem Adressbuch (86) und, bei Empfang einer Planungsanforderung (102) für ein derartiges bevorzugtes Ziel, Abrufen eines assoziierten Speicherelements aus dem Adressbuch als einen Beginnpunkt der Routenplanung, **dadurch gekennzeichnet, dass** ein derartiges bevorzugtes Zielspeicherelement weiterhin mindestens einen Startort (S) und mindestens einen mit dem kombinierten Start- und Zielort assoziierten Zwischenwegepunktort (W) beinhaltet und dass eine derartige Anforderung eine Prüfung (106) eines tatsächlichen Orts des Fahrzeugs gegenüber einem derartigen Startort auslöst und - falls positiv - zuerst Weginformationen zwischen einem derartigen Startort und einem nächsten Wegepunkt (110) erzeugt und präsentiert und dann den Rest des Wegs plant, oder - falls negativ - Weginformationen zwischen dem Startort (S) und dem Zielort erzeugt.

2. Verfahren nach Anspruch 1, **dadurch gekennzeichnet, dass** ein derartiges bevorzugtes Ziel ein tatsächliches Ziel ist und ein derartiger Startort mit einem tatsächlichen Fahrzeugort assoziiert ist, der beim Durchqueren eines Wegs zu dem tatsächlichen Ziel erreicht worden ist, wobei der tatsächliche Fahrzeugort in Assoziation zu einem nächsten Zwischenwegepunktort des Wegs und dem tatsächlichen Ziel beim Detektieren einer Unterbrechung der Durchquerung gespeichert wird.

3. Verfahren nach Anspruch 1, **dadurch gekennzeichnet, dass** ein derartiges bevorzugtes Zielspeicherelement das Speichern von einem oder mehreren personalisierten Wegen oder Wegteilen durch eine oder mehrere personalisierte Wegepunktinformationen berücksichtigt.

4. Verfahren nach Anspruch 1, **dadurch gekennzeichnet, dass** für einen oder mehrere kombinierte Startorte und Zielorte mehrere Wegepunktorte gespeichert werden.

5. Verfahren nach Anspruch 4, **dadurch gekennzeichnet, dass** ein früherer gespeicherter Wegepunkt (140) entlang eines Wegs einen engeren Abstand als ein später gespeicherter Wegepunkt (142) entlang des fraglichen Wegs aufweist.

6. Verfahren nach Anspruch 4, **dadurch gekennzeichnet, dass** mindestens ein Wegepunkt so ausgelegt ist, dass ein assoziierter Weg unterteilt wird, um eine relativ geradlinige und unterbrochene Wegesektion zu enthalten.

7. Verfahren nach Anspruch 4, **dadurch gekennzeichnet, dass** ein oder mehrere Wegepunkte gemäß dem Prinzip von Drehpunkten platziert werden.

8. Motorfahrzeugnavigationssystem, ausgelegt zum Implementieren eines Verfahrens nach Anspruch 1 und umfassend Adressbuchmittel (86), Benutzerschnittstellenmittel (82) zum Empfangen einer Planungsanforderung (102) für ein derartiges bevorzugtes Ziel, Verarbeitungsmittel (84), um daraufhin ein assoziiertes Speicherelement aus dem Adressbuch (86) als einen Beginnpunkt der Wegeplanung abzurufen, **dadurch gekennzeichnet, dass** die Adressbuchmittel (86) für ein derartiges bevorzugtes Zielspeicherelement mindestens einen Startort (S) und mindestens einen mit dem kombinierten Start- und Zielort assoziierten Zwischenwegepunktort (W) enthalten und dass solche Verarbeitungsmittel (84) ausgelegt sind, um unter der Steuerung einer derartigen Anforderung Fahrzeugortsmittel (90) auszulösen, um einen tatsächlichen Fahrzeugort vorzulegen zum Prüfen (106) gegenüber einem derartigen Startort, und dass die Verarbeitungsmittel ausgelegt sind, um - falls positiv - zuerst Wegeinformationen zwischen einem derartigen Startort und einem nächsten Wegepunkt (110) vorzulegen und dann den Rest der Route zu planen, - falls negativ - Wegeinformationen zwischen dem Startort (S) und dem Zielort zu erzeugen.

9. Kraftfahrzeugnavigationssystem nach Anspruch 8, **gekennzeichnet durch** Detektionsmittel zum Detektieren einer Unterbrechung des Durchquerens eines geplanten Wegs, wobei ein derartiges bevorzugtes Ziel ein tatsächliches Ziel ist und ein derartiger Startort mit einem tatsächlichen Fahrzeugort assoziiert, der beim Durchqueren des geplanten Wegs erreicht worden ist, wobei der tatsächliche Fahrzeugort in Assoziation zu einem oder mehreren nachfolgenden Zwischenwegepunktorten des geplanten Wegs und des tatsächlichen Ziels unter der Steuerung eines Detektionssignals von den Detektierungsmitteln gespeichert wird.

10. Kraftfahrzeugnavigationssystem nach Anspruch 8, **gekennzeichnet durch** Personalisierungsmittel zum Steuern des Speicherns in Assoziation mit einem derartigen bevorzugten Zielspeicherelement, von einer oder mehreren personalisierten Wegen oder Wegeteilen **durch** Empfangen von einer oder mehreren personalisierten Wegepunktinformationen.

11. Kraftfahrzeug nach Anspruch 8, umfassend ein interaktives Navigationssystem und umfassend Adressbuchmittel (86), Benutzerschnittstellenmittel (82) zum Empfangen einer Planungsanforderung (102) für ein derartiges bevorzugtes Ziel, Verarbeitungsmittel (84), um daraufhin ein assoziiertes Speicherelement aus dem Adressbuch (86) als einen Beginnpunkt der Wegeplanung abzurufen, **dadurch gekennzeichnet, dass** die Adressbuchmittel (86) für ein derartiges bevorzugtes Zielspeicherelement mindestens einen Startort (S) und mindestens einen mit dem kombinierten Start- und Zielort assoziierten Zwischenwegepunktort (W) enthalten und dass derartige Verarbeitungsmittel (84) ausgelegt sind, um unter der Steuerung einer derartigen Anforderung Fahrzeugortsmittel (90) auszulösen, um einen tatsächlichen Fahrzeugort zu detektieren, um diesen für eine Prüfung (106) gegenüber diesem Startort vorzulegen, und dass die Verarbeitungsmittel ausgelegt sind, um, falls positiv, zuerst Weginformationen zwischen diesem Startort und einem nächsten Wegepunkt (110) vorzulegen.

## Revendications

1. Un procédé d'exploitation d'un système de planification d'itinéraire pour un véhicule à moteur (80) basé sur des routes discrètes par le biais d'une mise en mémoire de destinations préférées dans un carnet d'adresses (86) et, après réception d'une demande de planification (102) pour une telle destination préférée, la récupération d'un élément mis en mémoire associé du carnet d'adresse en tant que point de départ de la planification d'itinéraire, **caractérisé en ce que** ledit élément mis en mémoire de destination préférée comprend en outre au point un emplacement de départ (S) et au moins un emplacement de point de cheminement intermédiaire (W) associé aux emplacements de départ et de destination combinés, et **en ce que** ladite demande déclenche une vérification (106) d'un emplacement réel du véhicule par rapport audit emplacement de départ, et - si la vérification est positive - produira et présentera d'abord des informations d'itinéraire entre ledit emplacement de départ et un point de cheminement suivant (110) puis planifiera le restant de l'itinéraire ou - si la vérification est négative - produira des informations d'itinéraire entre l'emplacement de départ (S) et l'emplacement de destination.

2. Un procédé selon la Revendication 1, **caractérisé en ce que** ladite destination préférée est une destination réelle et ledit emplacement de départ associe à un véhicule réel un emplacement qui a été atteint en parcourant un itinéraire vers ladite destination réelle, lequel emplacement de véhicule réel est conservé en mémoire en association avec un emplacement de point de cheminement intermédiaire suivant dudit itinéraire et de ladite destination réelle après détection d'une interruption dudit parcours.

3. Un procédé selon la Revendication 1, **caractérisé en ce que** ledit élément mis en mémoire de destination préférée autorise la mise en mémoire d'un ou plusieurs itinéraires ou parties d'itinéraires personnalisés par l'intermédiaire d'une ou plusieurs informations de points de cheminement personnalisés.

4. Un procédé selon la Revendication 1, **caractérisé en ce que** pour un ou plusieurs emplacements de départ et de destination combinés une pluralité d'emplacements de points de cheminement est conservée en mémoire.

5. Un procédé selon la Revendication 4, **caractérisé en ce qu'**un point de cheminement placé en mémoire antérieurement (140) le long d'un itinéraire présente un espacement plus faible qu'un point de cheminement placé en mémoire plus tard (142) le long de l'itinéraire en question.

6. Un procédé selon la Revendication 4, **caractérisé en ce qu'**au moins un point de cheminement est agencé de façon à segmenter un itinéraire associé de façon à inclure une section d'itinéraire relativement droite et interrompue.

7. Un procédé selon la Revendication 4, **caractérisé en ce qu'**un ou plusieurs points de cheminement sont placés selon le principe des points pivots.

8. Un système de navigation pour véhicule à moteur agencé de façon à mettre en oeuvre un procédé selon la Revendication 1 et comprenant un moyen de carnet d'adresses (86), un moyen d'interface utilisateur (82) destiné à recevoir une demande de planification (102) pour une destination préférée, un moyen de traitement (84) destiné à récupérer ensuite un élément mis en mémoire associé du carnet d'adresses (86) en tant que point de départ de la planification d'itinéraire, **caractérisé en ce que** le moyen de carnet d'adresses (86) pour ledit élément mis en mémoire de destination préférée comprend au moins un emplacement de départ (S) et au moins un emplacement de point de cheminement intermédiaire (W) associé aux emplacements de départ et de destination combinés, et **en ce que** ledit moyen de traitement (84) est agencé de façon à, sous la commande de ladite demande, déclencher un moyen de localisation de véhicule (90) de façon à présenter un emplacement de véhicule réel à des fins de vérification (106) par rapport audit emplacement de départ, et **en ce que** ledit moyen de traitement est agencé de façon à - si la vérification est positive - présenter d'abord des informations d'itinéraire entre ledit emplacement de départ et un point de cheminement suivant (110) puis planifier le restant de l'itinéraire, - si la vérification est négative - produire des informations d'itinéraire entre l'emplacement de départ (S) et l'emplacement de destination.

9. Un système de navigation pour véhicule à moteur selon la Revendication 8, **caractérisé par** un moyen de détection destiné à détecter une interruption du parcours d'un itinéraire planifié, dans lequel ladite destination préférée est une destination réelle et ledit emplacement de départ associe à un véhicule réel un emplacement qui a été atteint en parcourant ledit itinéraire planifié, lequel emplacement de véhicule réel est conservé en mémoire en association à un ou plusieurs emplacements de points de cheminement intermédiaires subséquents dudit itinéraire planifié et de ladite destination réelle sous la commande d'un signal de détection provenant dudit moyen de détection.

10. Un système de navigation pour véhicule à moteur selon la Revendication 8, **caractérisé par** un moyen de personnalisation destiné à commander la mise en mémoire, en association avec ledit élément mis en mémoire de destination préférée, d'un ou plusieurs itinéraires ou parties d'itinéraires personnalisés par l'intermédiaire de la réception d'une ou plusieurs informations de points de cheminement personnalisés.

11. Un véhicule à moteur selon la Revendication 8 comprenant un système de navigation interactif et un moyen de carnet d'adresses (86), un moyen d'interface utilisateur (82) destiné à recevoir une demande de planification (102) pour ladite destination préférée, un moyen de traitement (84) destiné à récupérer ensuite un élément mis en mémoire associé du carnet d'adresses (86) en tant que point de départ de la planification d'itinéraire, **caractérisé en ce que** le moyen de carnet d'adresses (86) pour ledit élément mis en mémoire de destination préférée comprend au moins un emplacement de départ (S) et au moins un emplacement de point de cheminement intermédiaire (W) associé aux emplacements de départ et de destination combinés, et **en ce que** ledit moyen de traitement (84) est agencé de façon à, sous la commande de ladite demande, déclencher un moyen de localisation de véhicule (90) de façon à détecter un emplacement de véhicule réel pour présenter celui-ci à des fins de vérification (106) par rapport audit emplacement de départ, et **en ce que** ledit moyen de traitement est agencé de façon à, si la vérification est positive, présenter d'abord des informations d'itinéraire entre ledit emplacement de départ et un point de cheminement suivant (110).
